# EUROPEAN PATENT SPECIFICATION

(11) **EP 2 995 472 B1**
(45) Date of publication and mention of the grant of the patent: **16.08.2017**
(21) Application number: 15184006.3
(22) Date of filing: 07.09.2015
(51) Int. Cl.: B60C 1/00, C08L 15/00, B60C 11/00

(54) **PNEUMATIC TIRE**
LUFTREIFEN
PNEUMATIQUE

(30) Priority: 10.09.2014 JP 2014183792
(43) Date of publication of application: 16.03.2016
(73) Proprietor: Sumitomo Rubber Industries, Ltd., Kobe-shi Hyogo 651-0072 (JP)
(72) Inventor: KOBAYASHI, Hiroyuki, Kobe-shi, Hyogo 651-0072, (JP)
(74) Representative: TBK

(56) References cited:
- EP-A1- 1 632 364
- US-B2- 6 573 323
- DATABASE WPI Week 201433 Thomson Scientific, London, GB; AN 2014-H88057 XP002753001, -& JP 2014 080550 A (SUMITOMO RUBBER IND LTD) 8 May 2014 (2014-05-08)
- DATABASE WPI Week 201408 Thomson Scientific, London, GB; AN 2014-B59528 XP002753002, -& JP 2014 009300 A (SUMITOMO RUBBER IND LTD) 20 January 2014 (2014-01-20)
- DATABASE WPI Week 201337 Thomson Scientific, London, GB; AN 2013-H18540 XP002753003, -& JP 2013 091758 A (SUMITOMO RUBBER IND LTD) 16 May 2013 (2013-05-16)
- DATABASE WPI Week 201334 Thomson Scientific, London, GB; AN 2013-H18546 XP002753004, -& JP 2013 091755 A (SUMITOMO RUBBER IND LTD) 16 May 2013 (2013-05-16)
- DATABASE WPI Week 201214 Thomson Scientific, London, GB; AN 2012-C04377 XP002753005, -& JP 2012 031258 A (SUMITOMO RUBBER IND LTD) 16 February 2012 (2012-02-16)

## Description

### BACKGROUND OF THE INVENTION

### Field of the Invention

The present invention relates to pneumatic tires. More specifically, the present invention relates to pneumatic tires for use in two-wheeled automotive vehicles.

### Description of the Background Art

A tire has a belt or a band disposed inward of a tread in the radial direction. The belt or the band reinforces the tire. The belt and/or the band are referred to also as a reinforcing layer.

The belt includes an inner layer and an outer layer. Each of the inner layer and the outer layer has multiple cords aligned with each other, and a topping rubber.

The band includes a cord and a topping rubber. In the band, the cord is helically wound. The cord extends substantially in the circumferential direction.

The tread of the tire is disposed outward of the reinforcing layer in the radial direction. The tread is layered over the reinforcing layer.

The tire contacts with a road surface at the tread. Grip performance of the tire depends on the characteristics of the tread.

The tread is formed of a rubber composition. A loss tangent of the tread correlates with the grip performance. The grip performance is good in a tread having a high loss tangent (also referred to as tanδ).

From the viewpoint of improvement of grip performance, various examinations for rubber compositions of treads have been made. The examples of the examinations are disclosed in Japanese Laid-Open Patent Publication No. 2008-184517 (hereinafter, referred to as Patent Literature 1) and Japanese Laid-Open Patent Publication No. 2012-102239 (hereinafter, referred to as Patent Literature 2).

In the rubber composition disclosed in Patent Literature 1, a modified hydrogenated polymer is blended with a matrix rubber. The modified hydrogenated polymer is formed of an aromatic vinyl-conjugated diene copolymer and/or a conjugated diene polymer each of which contains, in its molecule, one or more polar groups selected from the group consisting of a carboxylic acid group, a sulfonic acid group, a carboxylate functional group, and a sulfonate functional group, and in each of which a number average molecular weight on the polystyrene equivalent basis is 1.0×10³ to 2.0×10⁵, and a degree of hydrogenation of a conjugated diene moiety is 20% to 100%.

In the rubber composition disclosed in Patent Literature 2, a liquid diene polymer is used. In this rubber composition, a degree of hydrogenation of double bonds of a conjugated diene moiety in the liquid diene polymer is set to 50% by mole to 90% by mole.

EP 1 632 364 A1 discloses a rubber composition for a tire tread preventing separation of the tread portion from the tire main body, and superior in grip performance and abrasion resistance. The tire tread portion includes a two-layered tread portion having cap rubber at the ground-contact surface side and base rubber at the inner side. The cap rubber has the JIS (K6253) type hardness of 27 to 43 at 100°C. The base rubber has a thickness (TB) of at least 0.4 mm, and a loss tangent (tan') of at least 0.2. The ratio (TC/TB) of the thickness of the cap rubber (TC) to the thickness of the base rubber (TB) is at least 0.45.

### SUMMARY OF THE INVENTION

As described above, according to Patent Literature 1 and Patent Literature 2, the hydrogenated liquid polymer is used. Double bonds in the liquid polymer are hydrogenated in order to prevent the liquid polymer from crosslinking with the matrix rubber of the tread, thereby sufficiently generating hysteresis loss in the tread. However, the hydrogenated liquid polymer has a problem that compatibility thereof with the matrix rubber is reduced. Reduction in compatibility influences adhesion between the tread and a reinforcing layer. When a liquid polymer is used for a rubber composition of a tread, the tread may separate from the reinforcing layer during running. Damage with such a separation of the tread is called "tread separation".

In the rubber composition disclosed in Patent Literature 2, wet master batch including a liquid polymer is used, thereby reducing influence on adhesion due to the liquid polymer. However, even when the wet master batch is used, the liquid polymer exists near a boundary between the tread and the reinforcing layer. The use of the wet master batch prevents the tread separation to some degree, but the prevention is not sufficient.

In a race, a tire is heated due to running. A tread has a high temperature. In the tread having a high temperature, compatibility of a liquid polymer with a matrix rubber is reduced. The reduction of the compatibility causes bleeding of the liquid polymer. The liquid polymer that has bled influences adhesion between the tread and a reinforcing layer. Therefore, when this tire is used in a race, a risk of separation of the tread from the reinforcing layer is enhanced.

An object of the present invention is to provide a pneumatic tire that allows generation of tread separation to be reduced, while achieving improvement of grip performance.

A pneumatic tire according to the present invention includes a tread, a pair of sidewalls, a pair of beads, a carcass, and a reinforcing layer. Each sidewall extends almost inward from a corresponding one of ends of the tread in a radial direction. Each bead is disposed inward of a corresponding one of the sidewalls in the radial direction. The carcass extends on and between one of the beads and the other of the beads along inner sides of the tread and the sidewalls. The reinforcing layer is disposed inward of the tread in the radial direction and layered over the carcass, and the reinforcing layer includes a cord. The tread includes a cap layer and a base layer. In the radial direction, the cap layer is layered over the base layer, and the base layer is layered over the reinforcing layer. The cap layer contains a liquid polymer obtained by a styrene-butadiene copolymer being hydrogenated. The base layer has a thickness that is greater than 0.3 mm. A loss compliance of the base layer measured at 100°C is greater than or equal to 0.080 MPa⁻¹, and not greater than 0.13 MPa⁻¹. The base layer does not contain the liquid polymer.

Preferably, in the pneumatic tire, the thickness of the base layer is greater than or equal to 0.5 mm, and not greater than 3.0 mm.

Preferably, in the pneumatic tire, a difference of a hardness Hb(100) of the base layer measured at 100°C from a hardness Hc(100) of the cap layer measured at 100°C is greater than or equal to 0, and not greater than 10.

Preferably, in the pneumatic tire, a difference of a hardness Hb(50) of the base layer measured at 50°C from a hardness Hc(50) of the cap layer measured at 50°C is greater than or equal to -20, and not greater than -10.

Preferably, in the pneumatic tire, a weight average molecular weight of the liquid polymer is greater than or equal to 1000, and not greater than 20000.

Preferably, in the pneumatic tire, in the liquid polymer, a degree of hydrogenation of the styrene-butadiene copolymer is greater than or equal to 50% by mole, and not greater than 90% by mole.

Preferably, in the pneumatic tire, the cap layer is formed of a rubber composition including the liquid polymer and a base rubber. In the rubber composition, an amount of the liquid polymer per 100 parts by mass of the base rubber is greater than or equal to 30 parts by mass, and not greater than 200 parts by mass.

In the pneumatic tire according to the present invention, the tread includes the cap layer and the base layer. The cap layer forms an outer side portion of the tread. The cap layer contains a liquid polymer obtained by a styrene-butadiene copolymer being hydrogenated. The liquid polymer contributes to generation of hysteresis loss. The cap layer contributes to grip performance.

Further, in the tire, the base layer is disposed between the cap layer and the reinforcing layer. The base layer does not contain the liquid polymer described above. The base layer sufficiently adheres to the reinforcing layer. Further, the base layer has an appropriate thickness. Therefore, influence on the adhesion of the tread due to bleeding of the liquid polymer, is small. In the tire, generation of tread separation is effectively reduced.

In the tire, the base layer has an appropriate loss compliance. The base layer contributes to side grip performance and traction performance. In the tire, grip performance can be improved with enhanced effectiveness.

Thus, in the tire, while generation of tread separation is reduced, improvement of grip performance is achieved. That is, according to the present invention, the pneumatic tire that allows generation of tread separation to be reduced while allowing improvement of grip performance to be achieved, can be obtained.

### BRIEF DESCRIPTION OF THE DRAWINGS

FIG. 1 is a cross-sectional view of a part of a pneumatic tire according to one embodiment of the present invention; and
FIG. 2 is an enlarged cross-sectional view of a part of the tire shown in FIG. 1.

### DESCRIPTION OF THE PREFERRED EMBODIMENTS

Hereinafter, the present invention will be described in detail according to preferred embodiments with reference to the drawings as appropriate.

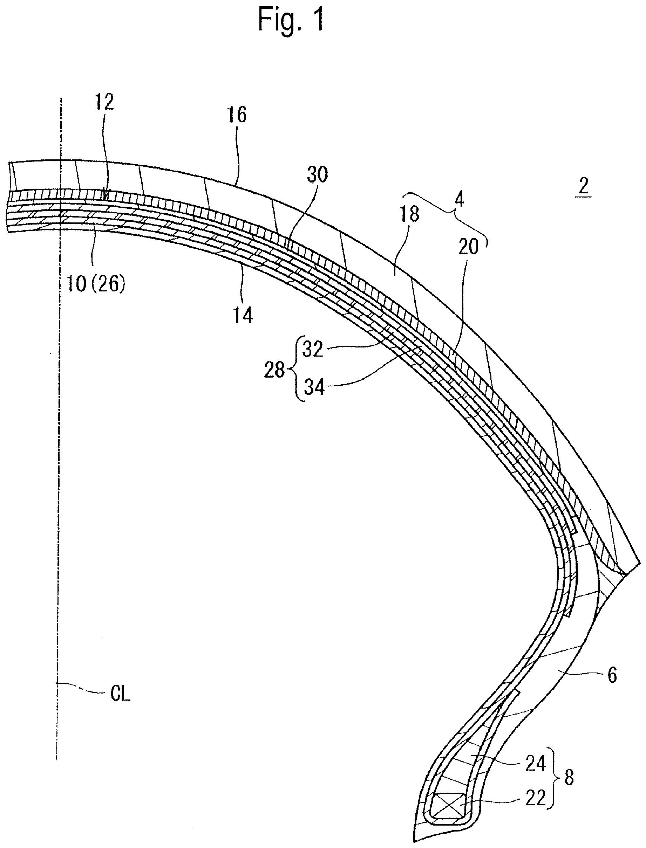

FIG. 1 shows a pneumatic tire 2. In FIG. 1, the upward/downward direction represents the radial direction of the tire 2, the leftward/rightward direction represents the axial direction of the tire 2, and the direction orthogonal to the surface of the sheet represents the circumferential direction of the tire 2. In FIG. 1, an alternate long and short dash line CL represents the equator plane of the tire 2. The tire 2 has a shape that is symmetric with respect to the equator plane except for a tread pattern.

The tire 2 includes a tread 4, a pair of sidewalls 6, a pair of beads 8, a carcass 10, a reinforcing layer 12, and an inner liner 14. The tire 2 is of a tubeless type. The tire 2 is mounted to two-wheeled automotive vehicles.

The tread 4 has a shape projecting outward in the radial direction. The tread 4 forms a tread surface 16 that is brought into contact with a road surface. The tread 4 of the tire 2 has no grooves. The tread 4 may have grooves to form a tread pattern.

The tread 4 has a cap layer 18 and a base layer 20. The cap layer 18 is disposed outward of the base layer 20 in the radial direction. The cap layer 18 is layered over the base layer 20 in the radial direction. The base layer 20 is layered over the reinforcing layer 12.

The cap layer 18 is formed by a rubber composition being crosslinked. That is, the cap layer 18 is formed of a crosslinked rubber.

The rubber composition of the cap layer 18 contains a base rubber. A preferable base rubber of the rubber composition is a styrene-butadiene copolymer (SBR). This is because a styrene-butadiene copolymer (SBR) contributes to grip performance. The styrene-butadiene copolymer is not limited to any specific one. In the tire 2, a styrene-butadiene copolymer, such as a solution-polymerized styrene-butadiene copolymer (S-SBR) or an emulsion-polymerized styrene-butadiene copolymer (E-SBR), used typically in tire manufacturing industry, can be used. Among them, from the viewpoint of grip performance and strength, a solution-polymerized styrene-butadiene copolymer (S-SBR) is particularly preferable.

In the tire 2, a weight average molecular weight of the styrene-butadiene copolymer (hereinafter, referred to as styrene-butadiene rubber) as the base rubber is preferably greater than or equal to 7.0×10⁵, and preferably not greater than 2.0×10⁶. The styrene-butadiene rubber having the weight average molecular weight that is set so as to be greater than or equal to 7.0×10⁵, contributes to wear resistance. In this viewpoint, the weight average molecular weight is more preferably greater than or equal to 8.0×10⁵. The styrene-butadiene rubber having the weight average molecular weight that is set so as to be not greater than 2.0×10⁶, contributes to processability. In this viewpoint, the weight average molecular weight is more preferably not greater than 1.6×10⁶.

In the present invention, the weight average molecular weight is calculated as a value on the standard polystyrene equivalent basis. The value on the standard polystyrene equivalent basis is obtained by gel permeation chromatography (GPC) (device: "GPC-8000 series" manufactured by TOSOH CORPORATION, detector: differential refractometer, column: "TSKgel SuperMultipore (registered trademark) HZ-M" manufactured by TOSOH CORPORATION).

In the tire 2, the styrene-butadiene rubber preferably has a styrene content that is greater than or equal to 30% by mass, and not greater than 55% by mass. The styrene-butadiene rubber having the styrene content that is set to be greater than or equal to 30% by mass, contributes to grip performance. In this viewpoint, the styrene content is more preferably greater than or equal to 35% by mass. The styrene-butadiene rubber having the styrene content that is set to be not greater than 55% by mass, contributes to wear resistance. In this viewpoint, the styrene content is more preferably not greater than 50% by mass.

In the present invention, the styrene content is obtained by measuring ¹H-NMR spectrum at 100 MHz by nuclear magnetic resonance spectroscopy (NMR) (device: "JNM-ECA series" manufactured by JEOL Ltd.).

In the tire 2, the styrene-butadiene rubber preferably has a vinyl content that is greater than or equal to 20% by mass, and not greater than 60% by mass. The styrene-butadiene rubber having the vinyl content that is set to be greater than or equal to 20% by mass, contributes to grip performance. In this viewpoint, the vinyl content is more preferably greater than or equal to 25% by mass. The styrene-butadiene rubber having the vinyl content that is set to be not greater than 60% by mass, contributes to wear resistance. In this viewpoint, the vinyl content is more preferably not greater than 55% by mass.

In the present invention, the vinyl content is obtained by measuring ¹H-NMR spectrum at 100 MHz by nuclear magnetic resonance spectroscopy (NMR) (device: "JNM-ECA series" manufactured by JEOL Ltd.).

In the tire 2, the rubber composition of the cap layer 18 contains a liquid polymer. In other words, a liquid polymer is blended in the rubber composition of the cap layer 18. The liquid polymer is a kind of softener as chemicals for rubber. In the tire 2, the liquid polymer is a hydrogenated styrene-butadiene copolymer.

For the tire 2, the liquid polymer is obtained by styrene-butadiene copolymer in an oillike state (hereinafter, referred to as styrene-butadiene oil) being hydrogenated. Specifically, the liquid polymer is obtained by double-bonds of butadiene moieties in the styrene-butadiene oil being hydrogenated. For the process for hydrogenating the styrene-butadiene oil, a publicly known conventional method can be used. Examples of the method include: a method in which the styrene-butadiene oil is caused to contact with pressurized hydrogen in an organic solvent in the presence of a metal catalyst to hydrogenate the styrene-butadiene oil; and a method in which the styrene-butadiene oil is hydrogenated by using hydrazine.

In the tire 2, from the viewpoint of grip performance, for the liquid polymer, the styrene-butadiene oil has a styrene content that is preferably greater than or equal to 10% by mass, and preferably not greater than 60% by mass. From the viewpoint of grip performance and wear resistance, the styrene-butadiene oil has a vinyl content that is preferably greater than or equal to 10% by mass, and preferably not greater than 60% by mass. The styrene content of the styrene-butadiene oil can be measured by the same measurement method as that for the styrene content of the styrene-butadiene rubber as described above. The vinyl content of the styrene-butadiene oil can be measured by the same measurement method as that for the vinyl content of the styrene-butadiene rubber as described above.

In the tire 2, the weight average molecular weight of the liquid polymer is preferably greater than or equal to 1.0×10³, and preferably not greater than 2.0×10⁴. The liquid polymer having the weight average molecular weight that is set to be greater than or equal to 1.0×10³ contributes to wear resistance. In this viewpoint, the weight average molecular weight is more preferably greater than or equal to 3.0×10³. The liquid polymer having the weight average molecular weight that is set to be not greater than 2.0×10⁴ contributes to grip performance. In this viewpoint, the weight average molecular weight is more preferably not greater than 1.5×10⁴. The weight average molecular weight of the liquid polymer can be measured by the same measurement method as that for the weight average molecular weight of the styrene-butadiene rubber as described above.

In the tire 2, the rubber composition of the cap layer 18 may include another softener different from the liquid polymer. In this case, from the viewpoint of grip performance, a content of the liquid polymer is preferably set so as to be greater than or equal to 60% by mass with respect to a total amount of softener, and is more preferably set so as to be greater than or equal to 80% by mass with respect to the total amount of the softener. Examples of the other softener include: process oils such as paraffinic process oils, naphthenic process oils, and aromatic process oils; and vegetable fats and oils such as castor oil, cottonseed oil, linseed oil, and rapeseed oil. Two or more kinds of the oils may be used as the other softener.

The rubber composition of the cap layer 18 may include carbon black as a reinforcing agent. Examples of the carbon black include furnace black such as FEF, GPF, HAF, ISAF, and SAF carbon blacks.

The carbon black contributes to strength of the cap layer 18. In this viewpoint, an amount of the carbon black per 100 parts by mass of the base rubber is preferably greater than or equal to 30 parts by mass, more preferably greater than or equal to 35 parts by mass, and particularly preferably greater than or equal to 60 parts by mass. From the viewpoint of processability, the amount of the carbon black is preferably not greater than 120 parts by mass.

In the tire 2, the rubber composition of the cap layer 18 may include silica instead of or in addition to the carbon black. Examples of the silica include dry silica, wet silica, synthesized silicate silica, and colloidal silica.

In a case where the rubber composition of the cap layer 18 includes the silica as a reinforcing agent, an amount of the silica per 100 parts by mass of the base rubber is preferably greater than or equal to 25 parts by mass, and preferably not greater than 100 parts by mass, from the viewpoint of reinforcing property and processability. In this case, a silane coupling agent as well as the silica is preferably used.

The rubber composition of the cap layer 18 may include, in addition to the base rubber, the softener, and the reinforcing agent as described above, chemicals, such as zinc oxide, stearic acid, an antioxidant, a wax, sulfur, and a vulcanization accelerator, which are typically used in the rubber industries, as appropriate.

The base layer 20 is formed by a rubber composition being crosslinked. A preferable base rubber of the rubber composition is a diene rubber. Specific examples of the diene rubber include natural rubbers (NR), polyisoprenes (IR), polybutadienes (BR), acrylonitrile-butadiene copolymers (NBR), and polychloroprenes (CR). The diene rubber includes a copolymer of a conjugated diene monomer and an aromatic vinyl monomer. Specific examples of the copolymer include solution-polymerized styrene-butadiene copolymers (S-SBR) and emulsion-polymerized styrene-butadiene copolymers (E-SBR).

The rubber composition of the base layer 20 may include a softener. Preferable examples of the softener include process oils such as paraffinic process oils, naphthenic process oils, and aromatic process oils, and vegetable fats and oils such as castor oil, cottonseed oil, linseed oil, and rapeseed oil. From the viewpoint of softening of the base layer 20, an amount of the softener per 100 parts by mass of the base rubber is preferably greater than or equal to 40 parts by mass. From the viewpoint of strength of the base layer 20, the amount of the softener is preferably not greater than 80 parts by mass. The liquid polymer, which is contained in the cap layer 18, is not blended in the rubber composition of the base layer 20.

The rubber composition of the base layer 20 may include carbon black as a reinforcing agent. Examples of the carbon black include furnace black such as FEF, GPF, HAF, ISAF, and SAF carbon blacks.

The carbon black contributes to strength of the base layer 20. In this viewpoint, an amount of the carbon black per 100 parts by mass of the base rubber is preferably greater than or equal to 30 parts by mass, more preferably greater than or equal to 50 parts by mass, and particularly preferably greater than or equal to 70 parts by mass. From the viewpoint of processability, the amount of the carbon black is preferably not greater than 120 parts by mass.

In the tire 2, the rubber composition of the base layer 20 may include silica instead of or in addition to the carbon black. Examples of the silica include dry silica, wet silica, synthesized silicate silica, and colloidal silica.

In a case where the rubber composition of the base layer 20 includes the silica as a reinforcing agent, an amount of the silica per 100 parts by mass of the base rubber is preferably greater than or equal to 25 parts by mass, and preferably not greater than 100 parts by mass, from the viewpoint of reinforcing property and processability. In this case, a silane coupling agent as well as the silica is preferably used.

The rubber composition of the base layer 20 may include, in addition to the base rubber, the softener, and the reinforcing agent as described above, chemicals, such as zinc oxide, stearic acid, an antioxidant, a wax, sulfur, and a vulcanization accelerator, which are typically used in the rubber industries, as appropriate.

Each sidewall 6 extends almost inward, in the radial direction, from a corresponding one of ends of the tread 4. Each sidewall 6 is formed of a crosslinked rubber that is excellent in cut resistance and weather resistance. Each sidewall 6 is disposed outward of the carcass 10 in the axial direction. The sidewalls 6 prevent damage of the carcass 10.

Each bead 8 is disposed inward of the sidewall 6 in the radial direction. Each bead 8 includes a core 22, and an apex 24 that extends outward from the core 22 in the radial direction. The core 22 is ring-shaped, and includes a non-stretchable wound wire. A typical material of the wire is a steel. The apex 24 is tapered outward in the radial direction. The apex 24 is formed of a highly hard crosslinked rubber.

The carcass 10 includes a carcass ply 26. The carcass ply 26 extends on and between the beads 8 on both sides, and extends along the tread 4 and the sidewalls 6. The carcass ply 26 is turned up around each core 22 from the inner side toward the outer side in the axial direction. The carcass 10 may include two or more carcass plies 26.

The carcass ply 26 includes multiple carcass cords aligned with each other, and a topping rubber. The absolute value of an angle of each carcass cord relative to the equator plane is from 75° to 90°. In other words, the carcass 10 forms a radial structure. The carcass cords are formed from an organic fiber. Preferable examples of the organic fiber include polyester fibers, nylon fibers, rayon fibers, polyethylene naphthalate fibers, and aramid fibers.

The reinforcing layer 12 is disposed inward of the tread 4 in the radial direction. The reinforcing layer 12 is layered over the carcass 10. In the tire 2, the reinforcing layer 12 includes a belt 28 and a band 30. The reinforcing layer 12 may include the belt 28 without including the band 30. The reinforcing layer 12 may include the band 30 without including the belt 28.

The belt 28 is disposed inward of the band 30 in the radial direction. The belt 28 is layered over the carcass 10. The belt 28 reinforces the carcass 10. The belt 28 includes an inner layer 32 and an outer layer 34. Each of the inner layer 32 and the outer layer 34 includes multiple belt cords aligned with each other, and a topping rubber, which are not shown. Each belt cord is tilted relative to the equator plane. A typical absolute value of a tilt angle is greater than or equal to 10°, and not greater than 35°. A direction in which the belt cords of the inner layer 32 are tilted relative to the equator plane is opposite to a direction in which the belt cords of the outer layer 34 are tilted relative to the equator plane. The belt cords are formed from an organic fiber. Examples of the organic fiber include polyester fibers, nylon fibers, rayon fibers, polyethylene naphthalate fibers, and aramid fibers. From the viewpoint of the belt 28 having a sufficient rigidity being formed, the organic fiber is preferably an aramid fiber. For the belt cords, cords whose material is a steel, that is, steel cords may be used.

The band 30 is disposed inward of the tread 4 in the radial direction. The band 30 is layered over the belt 28. The band 30 includes a band cord and a topping rubber, which are not shown. The band cord is helically wound. The band 30 has a so-called jointless structure. The band cord substantially extends in the circumferential direction. An angle of the band cord relative to the circumferential direction is less than or equal to 5°, and more preferably less than or equal to 2°. The belt 28 is held by the band cord. Therefore, lifting of the belt 28 is reduced. A preferable material of the band cord is a steel. For the band cord, an organic fiber may be used. In this case, from the viewpoint of the band 30 having a sufficient rigidity being formed, the organic fiber is preferably an aramid fiber.

The belt 28, which is one part of the reinforcing layer 12, includes the multiple belt cords aligned with each other. The band 30, which is the other part of the reinforcing layer 12, includes the helically wound band cord. The reinforcing layer 12 includes the belt cords and the band cord, that is, includes cords.

The inner liner 14 is disposed inward of the carcass 10. The inner liner 14 is joined to the inner surface of the carcass 10. The inner liner 14 is formed from a crosslinked rubber excellent in air-sealing property. A typical base rubber of the inner liner 14 is isobutylene-isoprene-rubber or halogenated isobutylene-isoprene-rubber. The inner liner 14 functions so as to maintain an internal pressure of the tire 2.

In the tire 2, the tread 4 includes the cap layer 18 and the base layer 20. As is apparent from FIG. 1, the cap layer 18 forms an outer side portion of the tread 4. In the tire 2, the cap layer 18 is brought into contact with a road surface.

As described above, the cap layer 18 of the tire 2 contains the liquid polymer obtained by the styrene-butadiene copolymer being hydrogenated. The liquid polymer contributes to generation of hysteresis loss. The cap layer 18 contributes to grip performance.

As described above, in the tire 2, the cap layer 18 is layered over the base layer 20 and the base layer 20 is layered over the reinforcing layer 12 in the radial direction. In other words, the base layer 20 is disposed between the cap layer 18 and the reinforcing layer 12.

In the tire 2, the liquid polymer, which is contained in the cap layer 18, is not blended in the base layer 20. The base layer 20 sufficiently adheres to the reinforcing layer 12. Further, the base layer 20 has an appropriate thickness. Therefore, influence on the adhesion of the tread 4 due to bleeding of the liquid polymer from the cap layer 18, is small. In the tire 2, generation of tread separation is effectively reduced.

As described below, in the tire 2, the base layer 20 has an appropriate loss compliance. The base layer 20 contributes to side grip performance and traction performance. In the tire 2, grip performance can be improved with enhanced effectiveness.

In the present invention, a loss compliance that is measured by a strain of 5% being periodically applied at 100°C is used as one of indexes representing physical properties of the rubber. The loss compliance is represented as a ratio (E"/(E*)²) of a loss elastic modulus E" to the square of a complex elastic modulus E*. The loss compliance is calculated by using a complex elastic modulus E* and a loss elastic modulus E". The complex elastic modulus E* and the loss elastic modulus E" are measured in compliance with the standard of "JIS K 6394", by using a viscoelasticity spectrometer (manufactured by Iwamoto Seisakusho), under the following measurement conditions. In this measurement, a plate-like test piece (length = 45 mm, width = 4 mm, thickness = 2 mm) is formed from the rubber composition of the base layer 20. The test piece is used for the measurement.
Initial strain: 10%
Amplitude: ±2.5%
Frequency: 10 Hz
Deformation mode: tension
Measurement temperature: 100°C

Thus, in the tire 2, while generation of tread separation is reduced, improvement of grip performance is achieved. That is, according to the present invention, the pneumatic tire 2 that allows generation of tread separation to be reduced while allowing improvement of grip performance to be achieved, can be obtained.

In the tire 2, the loss compliance (hereinafter, referred to as a loss compliance LCb) of the base layer 20 measured at 100°C is greater than or equal to 0.080 MPa⁻¹. Thus, the base layer 20 disposed inward of the cap layer 18 effectively contributes to side grip performance and traction performance. In the tire 2, grip performance can be improved with enhanced effectiveness. In this viewpoint, the loss compliance LCb is preferably greater than or equal to 0.090 MPa⁻¹.

In the tire 2, the loss compliance LCb is not greater than 0.13 MPa⁻¹. In the tire 2, generation of blowout due to the base layer 20 is effectively reduced. The tire 2 is excellent in durability. In this viewpoint, the loss compliance LCb is preferably not greater than 0.12 MPa⁻¹.

The temperature of the tire 2 increases due to running. In a race, the temperature of the tire 2 significantly increases. That is, in a race, the tire 2 is used in a state where the temperature is high. As described above, in the tire 2, the loss compliance LCb of the base layer 20 measured at 100°C is appropriately adjusted. In the tire 2, grip performance is sufficiently exhibited in a race.

In the tire 2, the loss compliance LCb of the base layer 20 measured at 100°C is preferably less than a loss compliance (hereinafter, referred to as a loss compliance LCc) of the cap layer 18 measured at 100°C. Thus, generation of blowout due to the base layer 20 is effectively reduced. In this viewpoint, a ratio (LCb/LCc) of the loss compliance LCb to the loss compliance LCc is preferably less than or equal to 0.7. From the viewpoint that the base layer 20 disposed inward of the cap layer 18 effectively contributes to side grip performance and traction performance, the ratio (LCb/LCc) is preferably not less than 0.4.

In the tire 2, a difference (Hb(100)-Hc(100)) of a hardness Hb(100) of the base layer 20 measured at 100°C from a hardness Hc(100) of the cap layer 18 measured at 100°C is preferably greater than or equal to 0, and preferably not greater than 10. When the difference is set so as to be greater than or equal to 0, a contact area is sufficiently assured. In the tire 2, side grip performance and traction performance are advantageous. In this viewpoint, the difference is more preferably greater than or equal to 5. When the difference is set so as to be not greater than 10, the tread 4 has an appropriate rigidity as a whole. Since the ground contact state becomes advantageous, the tire 2 is excellent in cornering stability and rigidity feeling. In this viewpoint, the difference is preferably not greater than 9.

In the tire 2, a difference (Hb(50)-Hc(50)) of a hardness Hb(50) of the base layer 20 measured at 50°C from a hardness Hc(50) of the cap layer 18 measured at 50°C is preferably greater than or equal to -20, and preferably not greater than -10. When the difference is set so as to be greater than or equal to -20, the base layer 20 effectively contributes to assuredly obtaining of side grip performance at a time when running starts. In this viewpoint, the difference is more preferably greater than or equal to -18. When the difference is set so as to be not greater than -10, the tread 4 has a sufficient rigidity as a whole, and side grip performance can be appropriately assured at a time when running starts with the temperature of the tire 2 being low.

In the present invention, the hardness is measured in compliance with the standard of "JIS K6253" by using a type A durometer. The durometer is pressed against the cross-sectional surface shown in FIG. 1 to measure the hardness. The tire 2 is put in an oven heated to 100°C or 50°C, and the tire 2 is left as it is in the oven for three hours. Thereafter, the hardness is measured.

In the tire 2, the hardness Hb(100) of the base layer 20 measured at 100°C is preferably greater than or equal to 33, and preferably not greater than 40. When the hardness Hb(100) is set so as to be greater than or equal to 33, the base layer 20 contributes to rigidity of the tread 4 in the tire 2 having a high temperature. In this viewpoint, the hardness Hb(100) is more preferably greater than or equal to 35. When the hardness Hb(100) is set so as to be not greater than 40, the base layer 20 effectively contributes to side grip performance and traction performance in the tire 2 having a high temperature. In the tire 2, grip performance can be improved with enhanced effectiveness. In this viewpoint, the hardness Hb(100) is more preferably not greater than 38.

In the tire 2, the hardness Hb(50) of the base layer 20 measured at 50°C is preferably greater than or equal to 45, and preferably not greater than 55. When the hardness Hb(50) is set so as to be greater than or equal to 45, the base layer 20 contributes to rigidity of the tread 4 at a time when running starts. In this viewpoint, the hardness Hb(50) is more preferably greater than or equal to 47. When the hardness Hb(50) is set so as to be not greater than 55, the base layer 20 effectively contributes to side grip performance and traction performance at a time when running starts. In the tire 2, grip performance can be improved with enhanced effectiveness. In this viewpoint, the hardness Hb(50) is more preferably not greater than 53.

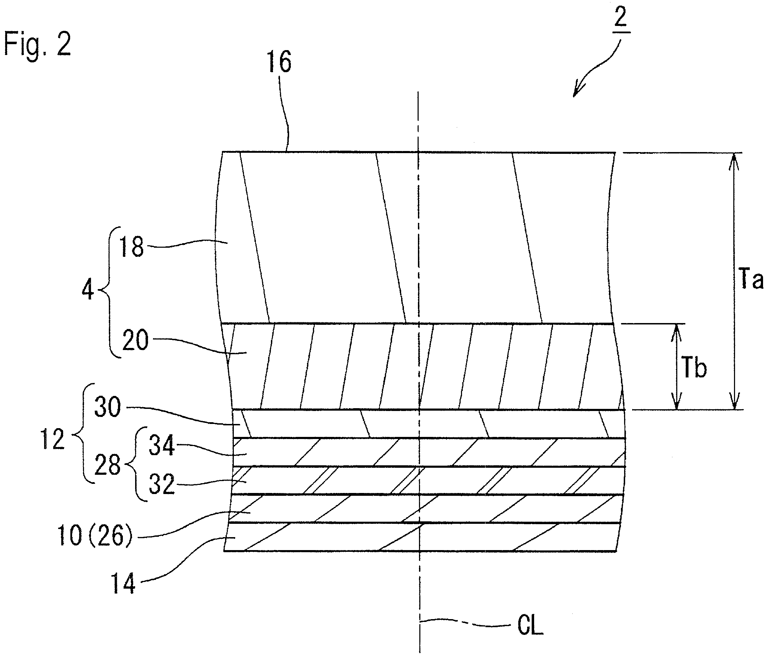

FIG. 2 shows a part of the tire 2 shown in FIG. 1, specifically, a portion of the tire 2 near the equator plane thereof. In FIG. 2, the upward/downward direction represents the radial direction of the tire 2, the leftward/rightward direction represents the axial direction of the tire 2, and the direction orthogonal to the surface of the sheet represents the circumferential direction of the tire 2.

In FIG. 2, a double-headed arrow Tb represents the thickness of the base layer 20. A double-headed arrow Ta represents the thickness of the tread 4. The thickness Tb and the thickness Ta are measured along the equator plane.

In the tire 2, the thickness Tb of the base layer 20 is greater than 0.3 mm. In other words, the base layer 20 has the thickness Tb that is greater than 0.3 mm. The base layer 20 allows the cap layer 18 to be sufficiently distanced from the reinforcing layer 12. Thus, influence of bleeding of the liquid polymer from the cap layer 18 on an interface between the tread 4 and the reinforcing layer 12 can be reduced. In the tire 2, generation of tread separation is effectively reduced. In this viewpoint, the thickness Tb is preferably greater than or equal to 0.5 mm, and more preferably greater than or equal to 1.0 mm.

As described above, in the tire 2, the loss compliance LCb of the base layer 20 is preferably less than the loss compliance LCc of the cap layer 18. From the viewpoint that influence on grip performance due to the base layer 20 can be reduced, the thickness Tb of the base layer 20 is preferably not greater than 3.0 mm, and more preferably not greater than 2.0 mm.

In the tire 2, a ratio (Tb/Ta) of the thickness Tb of the base layer 20 to the thickness Ta of the tread 4 is preferably greater than or equal to 0.15, and preferably not greater than 0.7. When the ratio is set so as to be greater than or equal to 0.15, the base layer 20 effectively contributes to prevention of generation of tread separation. In this viewpoint, the ratio is more preferably greater than or equal to 0.3. When the ratio is set so as to be not greater than 0.7, influence on grip performance due to the base layer 20 can be effectively reduced. In this viewpoint, the ratio is more preferably not greater than 0.6.

In the tire 2, a degree of hydrogenation of the styrene-butadiene copolymer in the liquid polymer contained in the cap layer 18 is preferably greater than or equal to 50% by mole, and preferably not greater than 90% by mole. When the degree of hydrogenation is set so as to be greater than or equal to 50% by mole, the liquid polymer effectively acts so as to generate hysteresis loss. The cap layer 18 that contains the liquid polymer contributes to grip performance. In this viewpoint, the degree of hydrogenation is more preferably greater than or equal to 60% by mole, and more preferably greater than or equal to 70% by mole. When the degree of hydrogenation is set so as to be not greater than 90% by mole, flexibility of the cap layer 18 can be appropriately maintained. In particular, at a time when running starts with the temperature of the tire 2 being low, the cap layer 18 effectively contributes to grip performance, and wear resistance is advantageously maintained. In this viewpoint, the degree of hydrogenation is more preferably not greater than 80% by mole.

In the present invention, the degree of hydrogenation is represented as a ratio of the number of moles of hydrogenated butadiene moieties to the total number of moles of butadiene moieties in the styrene-butadiene copolymer. The ratio is calculated based on a rate of reduction in spectrum of an unsaturated bond moiety, which is obtained by measuring ¹H-NMR spectrum at 100 MHz by nuclear magnetic resonance spectroscopy (NMR) (device: "JNM-ECA series" manufactured by JEOL Ltd.).

In the tire 2, in the rubber composition of the cap layer 18, an amount of the liquid polymer per 100 parts by mass of the base rubber is preferably greater than or equal to 30 parts by mass, and preferably not greater than 200 parts by mass. When the amount of the liquid polymer is set so as to be greater than or equal to 30 parts by mass, the liquid polymer effectively acts so as to generate hysteresis loss. The cap layer 18 that contains the liquid polymer contributes to grip performance. In this viewpoint, the amount of the liquid polymer is more preferably greater than or equal to 40 parts by mass. When the amount of the liquid polymer is set so as to be not greater than 200 parts by mass, processability and wear resistance can be appropriately maintained. In this viewpoint, the amount of the liquid polymer is more preferably not greater than 120 parts by mass.

In the present invention, the dimensions and angles of the components of the tire 2 are measured in a state where the tire 2 is mounted on a normal rim and inflated to a normal internal pressure. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

### [Examples]

Hereinafter, effects of the present invention will become apparent according to examples. However, the present invention should not be restrictively construed based on the description of examples.

### [Example 1]

Tires shown in FIGS. 1 to 2 were produced. The size of each tire was 200/60R420. A liquid polymer was contained in a cap layer. An amount of the liquid polymer was 60 parts by mass per 100 parts by mass of a base rubber. The liquid polymer was obtained by styrene-butadiene oil (trade name "Ricon 100" manufactured by CRAY VALLEY) being hydrogenated. The degree of hydrogenation of the liquid polymer was 80% by mole. The weight average molecular weight of the liquid polymer was 5000. The loss compliance LCc of the cap layer measured at 100°C was 0.170 MPa⁻¹. The hardness Hc(100) of the cap layer measured at 100°C was 35. The hardness Hc(50) of the cap layer measured at 50°C was 55. A base layer contains no liquid polymer. The thickness Ta of a tread was 6.5 mm.

### [Comparative example 1]

For comparative example 1, a conventional tire was used. In comparative example 1, no base layer was provided. No liquid polymer was blended in a rubber composition of a tread.

### [Comparative example 2]

Also for comparative example 2, a conventional tire was used. In comparative example 2, no base layer was provided. A liquid polymer having a degree of hydrogenation prepared as 50% by mole, was blended in a rubber composition of a tread. As styrene-butadiene oil for the liquid polymer, trade name "Ricon 100" manufactured by CRAY VALLEY was used. An amount of the liquid polymer is equal to the amount of the liquid polymer in the cap layer of example 1.

### [Comparative example 3]

Tires of comparative example 3 were obtained in the same manner as in example 1 except that a liquid polymer equivalent to the liquid polymer used for comparative example 2 was blended in a base layer. In the base layer, an amount of the liquid polymer was 40 parts by mass per 100 parts by mass of a base rubber.

### [Examples 2 to 5 and comparative example 4]

Tires of examples 2 to 5 and comparative example 4 were obtained in the same manner as in example 1 except that a thickness Tb of a base layer was as indicated below in Table 2.

### [Examples 6 to 12 and comparative examples 5 to 6]

Tires of examples 6 to 12 and comparative examples 5 to 6 were obtained in the same manner as in example 1 except that a loss compliance LCb of a base layer measured at 100°C, a difference (Hb(100) - Hc(100)) of a hardness Hb(100) of the base layer measured at 100°C from a hardness Hc(100) of a cap layer measured at 100°C, and a difference (Hb(50) - Hc(50)) of a hardness Hb(50) of the base layer measured at 50°C from a hardness Hc(50) of the cap layer measured at 50°C, were as indicated below in Table 3 and Table 4.

### [Evaluation for performances]

The above tires were each mounted to a rear wheel of a sport-type two-wheeled automotive vehicle (4-cycle) which had an engine displacement of 1000 cc, and the tires were inflated to an internal pressure of 180 kPa. The size of a rim for the rear wheel was 6.25×420. A commercially available tire (size: 125/80R420) was mounted to a front wheel, and the tire was inflated to an internal pressure of 250 kPa. The size of a rim for the front wheel was 3.50×420. This two-wheeled automotive vehicle was caused to run on a circuit course having an asphalt road surface, and a sensory evaluation for grip performance was made by a rider. Side grip performance, traction performance, cornering stability, and rigidity feeling were evaluated. The results of the evaluation are indicated below in Table 1 to Table 4. The greater the index is, the better the evaluation is.

### [Evaluation for durability]

The above tires were each mounted on a normal rim (size: 6.25×420), and each tire was inflated to an internal pressure of 180 kPa. The tire was mounted to a drum type tire testing machine (camber angle: -30°, slip angle: 3°). A vertical load of 4.14 kN was applied to the tire, and the tire was caused to run on the drum having a radius of 1.7 m, at a speed of 120 km/h, for 60 minutes. After the running, the tire was checked for presence or absence of damage (blowout and tread separation). The results thereof are indicated below in Table 1 to Table 4. A case where no damage was found is represented as "A", and a case where damage was found is represented as "C". A case where damage was rarely found is represented as "B". For tires in which tread separation was found in this evaluation for durability, the evaluation for performances as described above was not performed.

[Table 1]

**Table 1 Evaluation results**

| | | Comparative example 1 | Comparative example 2 | Comparative example 3 | Example 1 |
|---|---|---|---|---|---|
| Cap layer | Liquid polymer | N | Y | Y | Y |
| | Degree of hydrogenation [% by mole] | - | 50 | 80 | 80 |
| Base layer | Liquid polymer | - | - | Y | N |
| | Degree of hydrogenation [% by mole] | - | - | 50 | - |
| | Thickness Tb [mm] | - | - | 1.5 | 1.5 |
| | LCb [MPa⁻¹] | - | - | 0.120 | 0.090 |
| Hb(100)-Hc(100) | | - | - | 3 | 5 |
| Hb(50)-Hc(50) | | - | - | -5 | -12 |
| Side grip performance | | 80 | - | - | 110 |
| Traction performance | | 80 | - | - | 115 |
| Cornering stability | | 80 | - | - | 105 |
| Rigidity feeling | | 80 | - | - | 115 |
| Blowout | | A | - | - | A |
| Separation | | A | C | C | A |

[Table 2]

**Table 2 Evaluation results**

| | | Comparative example 4 | Example 2 | Example 3 | Example 4 | Example 5 |
|---|---|---|---|---|---|---|
| Cap layer | Liquid polymer | Y | Y | Y | Y | Y |
| | Degree of hydrogenation [% by mole] | 80 | 80 | 80 | 80 | 80 |
| Base layer | Liquid polymer | N | N | N | N | N |
| | Degree of hydrogenation [% by mole] | - | - | - | - | - |
| | Thickness Tb [mm] | 0.3 | 0.5 | 1.0 | 2.0 | 3.0 |
| | LCb [MPa⁻¹] | 0.090 | 0.090 | 0.090 | 0.090 | 0.090 |
| Hb(100)-Hc(100) | | 5 | 5 | 5 | 5 | 5 |
| Hb(50)-Hc(50) | | -12 | -12 | -12 | -12 | -12 |
| Side grip performance | | - | 110 | 110 | 105 | 105 |
| Traction performance | | - | 115 | 115 | 115 | 110 |
| Cornering stability | | - | 100 | 100 | 105 | 105 |
| Rigidity feeling | | - | 105 | 110 | 115 | 115 |
| Blowout | | - | A | A | A | A |
| Separation | | C | B | A | A | A |

[Table 3]

**Table 3 Evaluation results**

| | | Comparative example 5 | Example 6 | Example 7 | Comparative example 6 |
|---|---|---|---|---|---|
| Cap layer | Liquid polymer | Y | Y | Y | Y |
| | Degree of hydrogenation [% by mole] | 80 | 80 | 80 | 80 |
| Base layer | Liquid polymer | N | N | N | N |
| | Degree of hydrogenation [% by mole] | - | - | - | - |
| | Thickness Tb [mm] | 1.5 | 1.5 | 1.5 | 1.5 |
| | LCb [MPa⁻¹] | 0.075 | 0.120 | 0.120 | 0.150 |
| Hb(100)-Hc(100) | | 5 | 6 | 9 | 6 |
| Hb(50)-Hc(50) | | -12 | -18 | -10 | -10 |
| Side grip performance | | 100 | 115 | 105 | 115 |
| Traction performance | | 95 | 110 | 120 | 120 |
| Cornering stability | | 95 | 110 | 105 | 110 |
| Rigidity feeling | | 105 | 105 | 115 | 115 |
| Blowout | | A | A | A | C |
| Separation | | A | A | A | A |

[Table 4]

**Table 4 Evaluation results**

| | | Example 8 | Example 9 | Example 10 | Example 11 | Example 12 |
|---|---|---|---|---|---|---|
| Cap layer | Liquid polymer | Y | Y | Y | Y | Y |
| | Degree of hydrogenation [% by mole] | 80 | 80 | 80 | 80 | 80 |
| Base layer | Liquid polymer | N | N | N | N | N |
| | Degree of hydrogenation [% by mole] | - | - | - | - | - |
| | Thickness Tb [mm] | 1.5 | 1.5 | 1.5 | 1.5 | 1.5 |
| | LCb [MPa⁻¹] | 0.105 | 0.080 | 0.100 | 0.095 | 0.110 |
| Hb(100)-Hc(100) | | -1 | -2 | 5 | 12 | 8 |
| Hb(50)-Hc(50) | | -13 | -24 | -20 | -10 | -5 |
| Side grip performance | | 105 | 105 | 105 | 95 | 90 |
| Traction performance | | 100 | 100 | 110 | 95 | 95 |
| Cornering stability | | 100 | 100 | 105 | 95 | 90 |
| Rigidity feeling | | 95 | 95 | 110 | 105 | 115 |
| Blowout | | A | A | A | A | A |
| Separation | | A | A | A | A | A |

Tables 1 to 4 indicate that the evaluations for the tires of examples are higher than the evaluations for the tires of comparative examples. The evaluation results clearly indicate that the present invention is superior.

The technique concerning tires as described above is also applicable to various two-wheeled automotive vehicle tires.

A pneumatic tire 2 is provided which allows generation of tread separation to be reduced while allowing improvement of grip performance to be achieved.

The tire 2 includes a tread 4 and a reinforcing layer 12. The reinforcing layer 12 is disposed inward of the tread 4 in a radial direction and layered over a carcass 10. The tread 4 includes a cap layer 18 and a base layer 20. In the radial direction, the cap layer 18 is layered over the base layer 20, and the base layer 20 is layered over the reinforcing layer 12. The cap layer 18 contains a liquid polymer obtained by a styrene-butadiene copolymer being hydrogenated. The base layer 20 has a thickness that is greater than 0.3 mm. A loss compliance of the base layer 20 measured at 100°C is greater than or equal to 0.080 MPa⁻¹, and not greater than 0.13 MPa⁻¹. The base layer 20 does not contain the liquid polymer.

## Claims

1. A pneumatic tire (2) comprising a tread (4), a pair of sidewalls (6), a pair of beads (8), a carcass (10), and a reinforcing layer (12), wherein
each sidewall (6) extends almost inward from a corresponding one of ends of the tread (4) in a radial direction,
each bead (8) is disposed inward of a corresponding one of the sidewalls (6) in the radial direction,
the carcass (10) extends on and between one of the beads (8) and the other of the beads (8) along inner sides of the tread (4) and the sidewalls (6),
the reinforcing layer (12) is disposed inward of the tread (4) in the radial direction and layered over the carcass (10), and the reinforcing layer (12) includes a cord,
the tread (4) includes a cap layer (18) and a base layer (20),
in the radial direction, the cap layer (18) is layered over the base layer (20), and the base layer (20) is layered over the reinforcing layer (12),
the cap layer (18) contains a liquid polymer obtained by a styrene-butadiene copolymer (SBR) being hydrogenated,
the base layer (20) has a thickness (Tb) that is greater than 0.3 mm,
a loss compliance (LCb) of the base layer (20) measured in compliance with the standard of JIS K 6394 at 100°C is greater than or equal to 0.080 MPa⁻¹ and not greater than 0.13 MPa⁻¹ and
the base layer (20) does not contain the liquid polymer.

2. The pneumatic tire (2) according to claim 1, wherein the thickness (Tb) of the base layer (20) is greater than or equal to 0.5 mm, and not greater than 3.0 mm.

3. The pneumatic tire (2) according to claim 1 or 2, wherein a difference (Hb(100)-Hc(100)) of a hardness Hb(100) of the base layer (20) measured in compliance with the standard of JIS K6253 at 100°C from a hardness Hc(100) of the cap layer (18) measured in compliance with the standard of JIS K6253 at 100°C is greater than or equal to 0, and not greater than 10.

4. The pneumatic tire (2) according to any one of claims 1 to 3, wherein a difference (Hb(50)-Hc(50)) of a hardness Hb(50) of the base layer (20) measured in compliance with the standard of JIS K6253 at 50°C from a hardness Hc(50) of the cap layer (18) measured in compliance with the standard of JIS K6253 at 50°C is greater than or equal to -20, and not greater than -10.

5. The pneumatic tire (2) according to any one of claims 1 to 4, wherein a weight average molecular weight of the liquid polymer is greater than or equal to 1000, and not greater than 20000.

6. The pneumatic tire (2) according to any one of claims 1 to 5, wherein, in the liquid polymer, a degree of hydrogenation of the styrene-butadiene copolymer is greater than or equal to 50% by mole, and not greater than 90% by mole.

7. The pneumatic tire (2) according to any one of claims 1 to 6, wherein the cap layer is formed of a rubber composition including the liquid polymer and a base rubber, wherein in the rubber composition an amount of the liquid polymer per 100 parts by mass of the base rubber is greater than or equal to 30 parts by mass, and not greater than 200 parts by mass.

8. The pneumatic tire (2) according to any one of claims 1 to 7, wherein the base layer is disposed between the cap layer and the reinforcing layer.

9. The pneumatic tire (2) according to any one of claims 1 to 8, wherein a ratio (Tb/Ta) of the thickness Tb of the base layer (20) to the thickness Ta of the tread (4) is preferably greater than or equal to 0.15, and preferably not greater than 0.7.

10. The pneumatic tire (2) according to any one of claims 1 to 9, wherein the rubber composition of the cap layer (18) includes silica and/or carbon black, wherein the silica preferably includes dry silica, wet silica, synthesized silicate silica, and colloidal silica.

11. The pneumatic tire (2) according to any one of claims 7 to 10,
wherein a weight average molecular weight of the styrene-butadiene rubber as the base rubber is greater than or equal to 7.0x10⁵, and not greater than 2.0x10⁶, preferably the weight average molecular weight is set so as to be greater than or equal to 7.0x10⁵, and is more preferably greater than or equal to 8.0x10⁵, preferably the weight average molecular weight is set so as to be not greaterthan 2.0x10⁶, and is more preferably not greater than 1.6x10⁶.

12. The pneumatic tire (2) according to claim 11,
wherein the styrene-butadiene rubber has a styrene content that is greater than or equal to 30% by mass, and not greater than 55% by mass,
preferably the styrene content is greater than or equal to 35% by mass and not greater than 50% by mass.

13. The pneumatic tire (2) according to claim 11 or 12,
wherein the styrene-butadiene rubber has a vinyl content that is greater than or equal to 20% by mass, and not greater than 60% by mass,
preferably the vinyl content is greater than or equal to 25% by mass and not greater than 55% by mass.

14. The pneumatic tire (2) according to any one of claims 1 to 13, wherein the weight average molecular weight of the liquid polymer is greater than or equal to 1.0x10³, and not greater than 2.0x10⁴, preferably the weight average molecular weight is set to be greater than or equal to 1.0x10³ and is more preferably greater than or equal to 3.0x10³, further preferably the weight average molecular weight is set to be not greater than 2.0x10⁴ and is more preferably not greater than 1.5x10⁴.

15. The pneumatic tire (2) according to any one of claims 1 to 14, wherein the rubber composition of the cap layer 18 includes another softener different from the liquid polymer,
wherein preferably a content of the liquid polymer is set so as to be greater than or equal to 60% by mass with respect to a total amount of softener, and is more preferably set so as to be greater than or equal to 80% by mass with respect to the total amount of the softener,
wherein more preferably the other softener includes one or more process oils such as paraffinic process oils, naphthenic process oils, and aromatic process oils; and vegetable fats and oils such as castor oil, cottonseed oil, linseed oil, and rapeseed oil.

## Patentansprüche

1. Luftreifen (2) mit einer Lauffläche (4), einem Paar von Seitenwänden (6), einem Paar von Wülsten (8), einer Karkasse (10) und einer Verstärkungsschicht (12), wobei
sich jede Seitenwand (6) in einer radialen Richtung schier einwärts erstreckt von einem entsprechenden von Enden der Lauffläche (4),
jede Wulst (8) in der radialen Richtung einwärts von einer entsprechenden der Seitenwände (6) angeordnet ist,
sich die Karkasse (10) auf und zwischen einer von den Wülsten (8) und der anderen von den Wülsten (8) entlang Innenseiten der Lauffläche (8) und den Seitenwänden (6) erstreckt,
die Verstärkungsschicht (12) in der radialen Richtung einwärts von der Lauffläche (4) angeordnet ist und über die Karkasse (10) geschichtet ist und die Verstärkungsschicht (12) eine Litze aufweist,
die Lauffläche (4) eine Kappenschicht (18) und eine Basisschicht (20) aufweist,
die Kappenschicht (18) in der radialen Richtung über die Basisschicht (20) geschichtet ist und die Basisschicht (20) über die Verstärkungsschicht (12) geschichtet ist,
die Kappenschicht (18) einen flüssigen Polymer enthält, der durch einen hydrierten Styren-Butadien-Copolymer (SBR) erlangt wird,
die Basisschicht (20) eine Dicke (Tb) hat, die größer als 0,3 mm ist,
eine Verlustkomponente der dynamischen Nachgiebigkeit (LCb) der Basisschicht (20), die in Übereinstimmung mit dem Standard von JIS K 6394 bei 100°C gemessen ist, größer als oder gleich wie 0,080 MPa⁻¹ ist und nicht größer als 0,13 MPa⁻¹ ist, und
die Basisschicht (20) den flüssigen Polymer nicht enthält.

2. Luftreifen (2) nach Anspruch 1, wobei die Dicke (Tb) der Basisschicht (20) größer als oder gleich wie 0,5 mm und nicht größer als 3,0 mm ist.

3. Luftreifen (2) nach Anspruch 1 oder 2, wobei eine Differenz (Hb(100)-Hc(100)) einer Härte Hb(100) der Basisschicht (20), die in Übereinstimmung mit dem Standard von JIS K 6253 bei 100°C gemessen wird, zu einer Härte Hc(100) der Kappenschicht (18) in Übereinstimmung mit dem Standard von JIS K 6253 bei 100°C gemessen ist, größer als oder gleich wie 0 und nicht größer als 10 ist.

4. Luftreifen (2) nach einem der Ansprüche 1 bis 3, wobei eine Differenz (Hb(50)-Hc(50)) von einer Härte Hb(50) der Basisschicht (20), die in Übereinstimmung mit dem Standard von JIS K 6253 bei 50°C gemessen ist, zu einer Härte Hc(50) der Kappenschicht (18), die in Übereinstimmung mit dem Standard von JIS K 6253 bei 50°C gemessen ist, größer als oder gleich wie -20 und nicht größer als -10 ist.

5. Luftreifen (2) nach einem der Ansprüche 1 bis 4, wobei ein Gewichtsmittel des Molekulargewichts des flüssigen Polymers größer als oder gleich wie 1000 und nicht größer als 20 000 ist.

6. Luftreifen (2) nach einem der Ansprüche 1 bis 5, wobei in dem flüssigen Polymer ein Grad einer Hydrierung des Styren-Butadien-Copolymers größer als oder gleich wie 50 % pro Mol und nicht größer als 90 % pro Mol ist.

7. Luftreifen (2) nach einem der Ansprüche 1 bis 6, wobei die Kappenschicht aus einer Gummizusammensetzung mit dem flüssigen Polymer und einem Basisgummi ausgebildet ist, wobei in der Gummizusammensetzung ein Betrag des flüssigen Polymers pro 100 Masseteile des Basisgummis größer als oder gleich wie 30 Masseteile und nicht größer als 200 Masseteile ist.

8. Luftreifen (2) nach einem der Ansprüche 1 bis 7, wobei die Basisschicht zwischen der Kappenschicht und der Verstärkungsschicht angeordnet ist.

9. Luftreifen (2) nach einem der Ansprüche 1 bis 8, wobei ein Verhältnis (Tb/Ta) der Dicke Tb der Basisschicht (20) zu der Dicke Ta der Lauffläche (4) vorzugsweise größer als oder gleich wie 0,15 und vorzugsweise nicht größer als 0,7 ist.

10. Luftreifen (2) nach einem der Ansprüche 1 bis 9, wobei die Gummizusammensetzung der Kappenschicht (18) Kieselerde und/oder Ruß aufweist, wobei die Kieselerde vorzugsweise trockene Kieselerde, nasse Kieselerde, synthetisierte Silicatkieselerde und Kolloid-Kieselerde umfasst.

11. Luftreifen (2) nach einem der Ansprüche 7 bis 10,
wobei ein Gewichtsmittel des Molekulargewichts des Styren-Butadien-Gummis als der Basisgummi größer als oder gleich wie 7,0x10⁵ und nicht größer als 2,0x10⁶ ist,
wobei das Gewichtsmittel des Molekulargewichts vorzugsweise eingestellt ist, um größer als oder gleich wie 7,0x10⁵ und noch wünschenswerter größer als oder gleich wie 8,0x10⁵ ist, wobei das Gewichtsmittel des Molekulargewichts vorzugsweise eingestellt ist, um nicht größer als 2,0x10⁶ zu sein, und ist noch wünschenswerter nicht größer als 1,6x10⁶ ist.

12. Luftreifen (2) nach Anspruch 11,
wobei der Styren-Butadien-Gummi einen Styrengehalt hat, der größer als oder gleich wie 30 Masseprozent und nicht größer als 55 Masseprozent ist,
wobei der Styrengehalt vorzugsweise größer als oder gleich wie 35 Masseprozent und nicht größer als 50 Masseprozent ist.

13. Luftreifen (2) nach Anspruch 11 oder 12,
wobei der Styren-Butadien-Gummi einen Vinylgehalt hat, der größer als oder gleich wie 20 Masseprozent und nicht größer als 60 Masseprozent ist,
wobei der Vinylgehalt vorzugsweise größer als oder gleich wie 25 Masseprozent und nicht größer als 55 Masseprozent ist.

14. Luftreifen (2) nach einem der Ansprüche 1 bis 13, wobei das Gewichtsmittel des Molekulargewichts des flüssigen Polymers größer als oder gleich wie 1,0x10³ und nicht größer als 2,0x10⁴ ist,
wobei wünschenswert das Gewichtsmittel des Molekulargewichts eingestellt ist, um größer als oder gleich wie 1,0x10³ zu sein, und noch wünschenswerter größer als oder gleich wie 3,0x10³ ist,
wobei noch wünschenswerter das Gewichtsmittel des Molekulargewichts eingestellt ist, um nicht größer als 2,0x10⁴ zu sein, und ist noch wünschenswerter nicht größer als 1,5x10⁴.

15. Luftreifen (2) nach einem der Ansprüche 1 bis 14, wobei die Gummizusammensetzung der Kappenschicht (18) einen anderen Weichmacher verschieden von dem flüssigen Polymer aufweist,
wobei vorzugsweise ein Gehalt des flüssigen Polymers eingestellt ist, um größer als oder gleich wie 60 Masseprozent hinsichtlich einer Gesamtmenge von Weichmacher zu sein, und ist noch wünschenswerter eingestellt, um größer als oder gleich wie 80 Masseprozent hinsichtlich der Gesamtmenge des Weichmachers zu sein,
wobei der andere Weichmacher noch wünschenswerter eines oder mehrere Weichmacheröle, wie zum Beispiel Paraphinweichmacheröle, naphtenische Weichmacheröle und aromatische Weichmacheröle, und pflanzliche Fette und Öle aufweist, wie zum Beispiel Rizinusöl, Baumwollsamenöl, Leinsamenöl und Rapssamenöl.

## Revendications

1. Pneumatique (2) comprenant une bande de roulement (4), une paire de flancs (6), une paire de talons (8), une carcasse (10), et une couche de renforcement (12), dans lequel
chaque flanc (6) s'étend presque vers l'intérieur à partir d'une des extrémités de la bande de roulement (4) correspondante dans une direction radiale,
chaque talon (8) est disposé vers l'intérieur d'un des flancs (6) correspondant dans la direction radiale,
la carcasse (10) s'étend sur et entre un des talons (8) et l'autre des talons (8) le long de côtés internes de la bande de roulement (4) et des flancs (6),
la couche de renforcement (12) est disposée vers l'intérieur de la bande de roulement (4) dans la direction radiale et est déposée en couche sur la carcasse (10), et la couche de renforcement (12) comprend un câble,
la bande de roulement (4) comprend une couche de sommet (18) et une couche de base (20),
dans la direction radiale, la couche de sommet (18) est déposée en couche sur la couche de base (20), et la couche de base (20) est déposée en couche sur la couche de renforcement (12),
la couche de sommet (18) contient un polymère liquide obtenu par un copolymère de styrène-butadiène (SBR) étant hydrogéné,
la couche de base (20) présente une épaisseur (Tb) qui est supérieure à 0,3 mm,
une perte de conformité (LCb) de la couche de base (20) mesurée en conformité avec la norme de JIS K 6394 à 100°C est supérieure ou égale à 0,080 MPa⁻¹ et d'au plus 0,13 MPa⁻¹, et
la couche de base (20) ne contient pas le polymère liquide.

2. Pneumatique (2) selon la revendication 1, dans lequel l'épaisseur (Tb) de la couche de base (20) est supérieure ou égale à 0,5 mm, et d'au plus 3,0 mm.

3. Pneumatique (2) selon la revendication 1 ou 2, dans lequel une différence (Hb(100)-Hc(100)) d'une dureté Hb(100) de la couche de base (20) mesurée en conformité avec la norme de JIS K6253 à 100°C à partir d'une dureté Hc(100) de la couche de sommet (18) mesurée en conformité avec la norme de JIS K6253 à 100°C est supérieure ou égale à 0, et d'au plus 10.

4. Pneumatique (2) selon l'une quelconque des revendications 1 à 3, dans lequel une différence (Hb(50)-Hc(50)) d'une dureté Hb(50) de la couche de base mesurée en conformité avec la norme de JIS K6253 à 50°C à partir d'une dureté Hc(50) de la couche de sommet (18) mesurée en conformité avec la norme de JIS K6253 à 50°C est supérieure ou égale à -20, et d'au plus -10.

5. Pneumatique (2) selon l'une quelconque des revendications 1 à 4, dans lequel une masse moléculaire moyenne en masse du polymère liquide est supérieure ou égale à 1 000, et d'au plus 20 000.

6. Pneumatique (2) selon l'une quelconque des revendications 1 à 5, dans lequel, dans le polymère liquide, un degré d'hydrogénation du copolymère de styrène-butadiène est supérieur ou égal à 50 % en mol, et d'au plus 90 % en mol.

7. Pneumatique (2) selon l'une quelconque des revendications 1 à 6, dans lequel la couche de sommet est formée d'une composition de caoutchouc comprenant le polymère liquide et un caoutchouc de base, dans lequel dans la composition de caoutchouc une quantité du polymère liquide pour 100 parties en masse du caoutchouc de base est supérieure ou égale à 30 parties en masse, et d'au plus 200 parties en masse.

8. Pneumatique (2) selon l'une quelconque des revendications 1 à 7, dans lequel la couche de base est disposée entre la couche de sommet et la couche de renforcement.

9. Pneumatique (2) selon l'une quelconque des revendications 1 à 8, dans lequel un rapport (Tb/Ta) de l'épaisseur Tb de la couche de base (20) à l'épaisseur Ta de la bande de roulement (4) est de préférence supérieur ou égal à 0,15, et de préférence d'au plus 0,7.

10. Pneumatique (2) selon l'une quelconque des revendications 1 à 9, dans lequel la composition de caoutchouc de la couche de sommet (18) comprend de la silice et/ou du noir de carbone, dans lequel la silice comprend de préférence de la silice sèche, de la silice humide, de la silice de silicate synthétisée, et de la silice colloïdale.

11. Pneumatique (2) selon l'une quelconque des revendications 7 à 10, dans lequel une masse moléculaire moyenne en masse du caoutchouc de styrène-butadiène comme le caoutchouc de base est supérieure ou égale à 7,0 x 10⁵, et d'au plus 2,0 x 10⁶,
la masse moléculaire moyenne en masse est de préférence fixée pour être supérieure ou égale à 7,0 x 10⁵, et est encore mieux supérieure ou égale à 8,0 x 10⁵,
la masse moléculaire moyenne en masse est de préférence fixée pour être d'au plus 2,0 x 10⁶,
et est encore mieux d'au plus 1,6 x 10⁶.

12. Pneumatique (2) selon la revendication 11, dans lequel le caoutchouc de styrène-butadiène présente une teneur en styrène qui est supérieure ou égale à 30 % en masse, et d'au plus 55 % en masse,
la teneur en styrène est de préférence supérieure ou égale à 35 % en masse et d'au plus 50 % en masse.

13. Pneumatique (2) selon la revendication 11 ou 12, dans lequel le caoutchouc de styrène-butadiène présente une teneur en vinyle qui est supérieure ou égale à 20 % en masse, et d'au plus 60 % en masse,
la teneur en vinyle est de préférence supérieure ou égale à 25 % en masse et d'au plus 55 % en masse.

14. Pneumatique (2) selon l'une quelconque des revendications 1 à 13, dans lequel la masse moléculaire moyenne en masse du polymère liquide est supérieure ou égale à 1,0 x 10³, et d'au plus 2,0 x 10⁴,
la masse moléculaire moyenne en masse est de préférence fixée pour être supérieure ou égale à 1,0 x 10³ et est encore mieux supérieure ou égale à 3,0 x 10³,
la masse moléculaire moyenne en masse est bien mieux encore fixée pour être d'au plus 2,0 x 10⁴ et est bien mieux encore d'au plus 1,5 x 10⁴.

15. Pneumatique (2) selon l'une quelconque des revendications 1 à 14, dans lequel la composition de caoutchouc de la couche de sommet (18) comprend un autre agent ramollissant différent du polymère liquide,
dans lequel une teneur du polymère liquide est de préférence réglée pour être supérieure ou égale à 60 % en masse par rapport à une quantité totale d'agent ramollissant, et est bien mieux encore réglée pour être supérieure ou égale à 80 % en masse par rapport à la quantité totale de l'agent ramollissant,
dans lequel l'autre agent ramollissant comprend bien mieux encore une ou plusieurs huiles de traitement, telles que des huiles de traitement paraffiniques, des huiles de traitement naphténiques, et des huiles de traitement aromatiques ; et des graisses et huiles végétales, telles que l'huile de ricin, l'huile de coton, l'huile de lin, et l'huile de colza.
